# FASCICULE DE BREVET EUROPEEN

(11) **EP 1 814 769 B1**
(45) Date de publication et mention de la délivrance du brevet: **29.10.2008**
(21) Numéro de dépôt: 05821019.6
(22) Date de dépôt: 22.11.2005
(51) Int. Cl.: B62D 5/083, F15B 9/00

(54) **VALVE DE DIRECTION ET MODULE POUR UNE TELLE VALVE**
LENKVENTIL UND MODUL DAFÜR
STEERING VALVE AND MODULE THEREFOR

(30) Priorité: 22.11.2004 FR 0412389
(43) Date de publication de la demande: 08.08.2007
(73) Titulaire: TRW France, 21600 Longvic (FR); TRW Automotive GmbH, 73553 Alfdorf (DE)
(72) Inventeur: MARTINS, José, F-21700 Comblanchien (FR); EBERHART, Eugen, 40223 Düsseldorf (DE); PHILIPPI, Andreas, 47057 Duisburg (DE); WEISSBRODT, Rainer, 45473 Mühlheim/Ruhr (DE)
(74) Mandataire: Lepelletier-Beaufond, François
(86) Numéro de dépôt international: PCT/FR2005/002899
(87) Numéro de publication internationale: WO 2006/054001

(56) Documents cités:
- DE-A1- 4 240 619
- US-A- 4 966 192
- US-A- 5 575 193
- US-A- 5 680 804
- US-A- 5 769 121
- US-A- 5 797 309
- US-B1- 6 267 133

## Description

L'invention a trait aux valves pour commander l'alimentation hydraulique d'un actionneur d'assistance de direction de véhicule.

On sait qu'une telle valve comporte un arbre d'entrée, un arbre de sortie, une barre de torsion reliée rigidement respectivement à l'arbre d'entrée et à l'arbre de sortie ainsi qu'une chemise entourant l'arbre d'entrée et reliée rigidement à l'arbre de sortie.

Lorsque l'arbre d'entrée et la chemise sont dans une position relative angulaire centrale ou neutre, l'actionneur ne produit aucun effort d'assistance. Lorsqu'il existe, par rapport à la position neutre, un décalage angulaire entre la chemise et l'arbre d'entrée, rendu possible par l'élasticité de la barre de torsion, l'actionneur produit un effort d'assistance, ayant un sens et une intensité correspondant au décalage angulaire entre la chemise et l'arbre d'entrée, de sorte que l'effort d'assistance est directement lié au couple exercé sur l'arbre d'entrée par rapport à l'arbre de sortie.

II a déjà été proposé, notamment par les brevets américains 5,575,193, 5,680,804, 5,769,121, 5,797,309 et 6,267,133, d'ajouter un ensemble de liaison élastique coopérant à accouplement avec la chemise pour assurer l'absence de mouvement relatif angulaire entre l'arbre d'entrée et la chemise avant qu'un seuil prédéterminé de couple soit exercé sur l'arbre d'entrée.

En particulier, le brevet américain 5,680,804 décrit un tel ensemble de liaison élastique selon le préambule de la revendication 19 et 1 qui comporte un manchon de support relié rigidement à l'arbre d'entrée, un ressort à élasticité axiale résistant à la torsion et un mécanisme d'accouplement pour convertir le couple exercé sur l'arbre d'entrée par rapport à l'arbre de sortie en une force axiale agissant sur le ressort résistant à la torsion, le mécanisme d'accouplement comportant un manchon d'accouplement présentant une face transversale, regardant la chemise, dans laquelle sont ménagées des empreintes de logement de billes, le ressort résistant à torsion étant disposé entre le manchon d'accouplement et le manchon de support, ce ressort sollicitant le manchon d'accouplement vers la chemise.

Du fait que le ressort à élasticité axiale est résistant à la torsion, le manchon d'accouplement coopère à simple glissement avec l'arbre d'entrée.

L'ensemble de liaison élastique décrit par US 5,680,804 offre l'intérêt de pouvoir être mis en oeuvre grâce à un module séparé rassemblant le manchon d'accouplement, le ressort résistant à la torsion et le manchon de support, ce dernier devant simplement être fixé rigidement à l'arbre d'entrée lors de l'assemblage avec le reste de la partie tournante de la valve de direction.

Dans les autres cas, c'est-à-dire lorsqu'on utilise un ressort hélicoïdal conventionnel, il est nécessaire, pour monter à translation axiale le manchon d'accouplement vis-à-vis de l'arbre d'entrée, de pratiquer des gorges orientées axialement dans la surface latérale externe de l'arbre d'entrée et dans la surface latérale interne du manchon d'accouplement, avec une ou plusieurs billes logées à la fois dans une gorge de l'arbre d'entrée et dans la gorge du manchon d'accouplement qui lui fait face.

L'invention vise une valve de direction à ensemble de liaison élastique coopérant à accouplement avec la chemise qui puisse être mis en oeuvre de façon plus simple, plus commode et plus économique.

L'invention propose à cet effet une valve de direction pour commander l'alimentation hydraulique d'un actionneur d'assistance, comportant :
- un arbre d'entrée ;
- un arbre de sortie ;
- une barre de torsion reliée rigidement respectivement audit arbre d'entrée et audit arbre de sortie ;
- une chemise entourant ledit arbre d'entrée et reliée rigidement audit arbre de sortie ; et
- un ensemble de liaison élastique relié rigidement audit arbre d'entrée et coopérant à accouplement avec ladite chemise pour assurer l'absence de mouvement relatif angulaire entre ledit arbre d'entrée et ladite chemise avant qu'un seuil prédéterminé de couple soit exercé sur ledit arbre d'entrée par rapport audit arbre de sortie, ledit ensemble de liaison élastique comportant :
   un manchon de support relié rigidement audit arbre d'entrée ;
   un ressort à élasticité axiale ; et
   un mécanisme d'accouplement pour convertir le couple exercé sur ledit arbre d'entrée par rapport audit arbre de sortie en une force axiale agissant sur ledit ressort, ledit mécanisme d'accouplement comportant un manchon d'accouplement présentant une face transversale, regardant la chemise, dans laquelle sont ménagées des empreintes de logement de billes, ledit ressort étant disposé entre ledit manchon d'accouplement et ledit manchon de support, ledit ressort sollicitant ledit manchon d'accouplement vers ladite chemise ;
caractérisée en ce que :
- ledit manchon de support comporte une portion entourée par ledit manchon d'accouplement ; et
- des moyens de montage à translation axiale, interdisant tout autre mouvement relatif, sont prévus entre ladite portion entourée du manchon de support et ledit manchon d'accouplement.

On voit que la valve selon l'invention offre tout à la fois l'avantage que le ressort à élasticité axiale n'a pas besoin d'être résistant à la torsion et qu'il n'est pas besoin de ménager des gorges orientées axialement dans la surface latérale externe de l'arbre d'entrée.

On notera d'ailleurs que l'ensemble de liaison élastique faisant partie de la valve selon l'invention offre l'avantage, comme on le verra ci-après, de pouvoir être mis en oeuvre grâce à un module pré-assemblé comportant le manchon de support, le ressort à élasticité axiale et le manchon d'accouplement.

Selon des caractéristiques préférées :
- ledit manchon de support comporte une frette globalement tubulaire entourant l'arbre d'entrée, ladite portion du manchon de support entourée par ledit manchon d'accouplement appartenant à ladite frette ;
- lesdits moyens de montage à translation axiale comportent, sur la face latérale externe de ladite frette, des gorges orientées axialement chacune adaptée à coopérer avec des billes ;
- ledit manchon d'accouplement présente une face latérale interne dans laquelle sont ménagées des gorges orientées axialement semblables aux gorges de ladite frette, lesdites billes étant chacune engagée dans une gorge du manchon d'accouplement et dans une gorge de ladite frette ;
- ledit manchon de support comporte, à l'opposé de ladite chemise, une bague qui saille radialement vers l'extérieur à partir de ladite frette ;
- ladite bague est engagée dans une gorge annulaire ménagée dans la surface latérale externe de ladite frette ;
- ladite bague présente à sa périphérie un rebord annulaire orienté suivant la direction axiale et saillant vers ladite chemise ;
- ledit ressort à élasticité axiale prend appui par une extrémité sur ladite bague ;
- ledit manchon d'accouplement présente une portion annulaire et une portion tubulaire ayant globalement le même diamètre interne, le diamètre externe de la portion annulaire étant plus important que celui de la portion tubulaire, avec une surface transversale d'épaulement entre la surface latérale externe de la portion annulaire et la surface latérale externe de la portion tubulaire ;
- ladite surface d'épaulement est opposée à ladite face transversale dans laquelle sont ménagées des empreintes, ledit ressort à élasticité axiale prenant appui par une extrémité sur ladite surface transversale d'épaulement ;
- ledit manchon d'accouplement présente, dans la surface latérale externe de ladite portion annulaire, une gorge annulaire de logement d'un joint d'étanchéité ;
- la portion tubulaire dudit manchon d'accouplement présente, à l'opposé de ladite portion annulaire, un collet annulaire qui saille vers l'intérieur à partir de la surface latérale interne du manchon d'accouplement ; et/ou
- la surface latérale interne dudit collet présente une gorge annulaire de logement d'un joint d'étanchéité.

Dans un premier mode de réalisation préféré, ledit manchon de support est relié rigidement audit arbre d'entrée par soudure.

Dans un deuxième mode de réalisation préféré, ledit manchon de support est relié rigidement audit arbre d'entrée par emmanchement à force.

De préférence, pour des raisons de simplicité et de commodité tant à la fabrication qu'à l'assemblage :
- ledit arbre d'entrée présente un diamètre externe plus grand dans une portion entourée par ledit manchon de support que dans une portion voisine non entourée par ledit manchon de support tandis que ledit manchon de support présente un diamètre interne plus petit dans une portion d'emmanchement que dans une portion voisine de ladite portion d'emmanchement, ladite portion d'emmanchement dudit manchon de support étant emmanché à force sur ladite portion à plus grand diamètre dudit arbre ;
- ladite portion d'emmanchement du manchon de support est moins longue que ladite portion à plus grand diamètre dudit arbre d'entrée ; et/ou
- ladite portion d'emmanchement est située entre ladite portion voisine dudit manchon de support et l'extrémité dudit manchon de support opposée à ladite chemise.

L'invention vise également, sous un second aspect un module pour mettre en oeuvre l'ensemble de liaison élastique de la valve qui vient d'être exposée, comportant :
- un manchon de support ;
- un ressort à élasticité axiale ; et
- un manchon d'accouplement présentant une face transversale dans laquelle sont ménagées des empreintes pour loger des billes, ledit ressort étant disposé entre ledit manchon d'accouplement et ledit manchon de support, ledit ressort sollicitant ledit manchon d'accouplement vers le côté que regarde ladite face transversale ;
caractérisé en ce que :
- ledit manchon de support comporte une portion entourée par ledit manchon d'accouplement; et
- des moyens de montage à translation axiale, interdisant tout autre mouvement relatif, sont prévus entre ladite portion entourée du manchon de support et ledit manchon d'accouplement.

Selon des caractéristiques préférées qui conviennent particulièrement bien au mode de réalisation préféré où le manchon de support est relié rigidement à l'arbre d'entrée par emmanchement à force :
- ledit manchon de support présente un diamètre interne plus petit dans une portion d'emmanchement que dans une portion voisine de ladite portion d'emmanchement ;
- ladite portion d'emmanchement du manchon de support est moins longue que ladite portion voisine du manchon de support ;
- ladite portion d'emmanchement est située entre ladite portion voisine dudit manchon de support et l'extrémité dudit manchon de support opposée à ladite face transversale dudit manchon d'accouplement ; et/ou
- le module admet une position d'attente où le manchon d'accouplement est en butée sous l'effet dudit ressort et saille du manchon de support sur une longueur au moins égale à la longueur de ladite portion d'emmanchement.

L'exposé de l'invention sera maintenant poursuivi par la description détaillée d'un exemple de réalisation, donnée ci-après à titre illustratif et non limitatif, en référence aux dessins annexés. Sur ceux-ci :
- la figure 1 montre en coupe une valve de direction conforme à l'invention et montre schématiquement les différents éléments du système hydraulique de la direction assistée de véhicule auquel appartient cette valve ;
- la figure 2 est une vue similaire à celle de la figure 1, mais ne montrant que la partie rotative de la valve de direction ;
- la figure 3 est une vue en plan partielle prise comme indiqué en III sur la figure 2 ;
- la figure 4 est une vue similaire à celle de la figure 2, mais ne montrant qu'une portion de la partie rotative de la valve hydraulique non encore assemblée avec un module pour fournir une liaison élastique entre l'arbre d'entrée et la chemise de la valve hydraulique ;
- la figure 5 montre ce module isolément ;
- la figure 6 est une vue similaire à celle de la figure 2, mais ne montrant que partiellement la chemise et la portion de l'arbre d'entrée entourée par la chemise, pour une variante de la partie rotative de la valve ;
- la figure 7 est une vue similaire à celle de la figure 6, mais où le manchon de support de l'ensemble de liaison élastique n'a pas encore été emmanché à force sur l'arbre d'entrée ; et
- la figure 8 est une vue de détail montrant l'agencement de l'arbre d'entrée et du manchon de support, dans une position qui précède celle illustrée sur la figure 7 lors de la mise en place sur l'arbre d'entrée du module qui sert à fournir une liaison élastique entre l'arbre d'entrée et la chemise de la valve hydraulique.

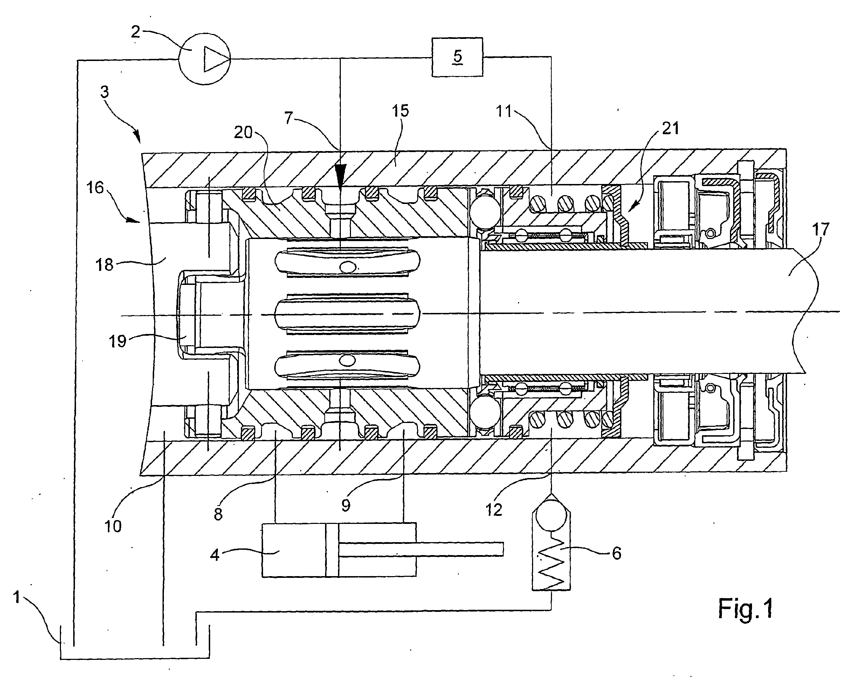

Le système hydraulique illustré sur la figure 1 comporte un réservoir 1, une pompe 2, une valve d'assistance 3, un actionneur d'assistance 4, une valve auxiliaire 5 et un clapet de décharge 6.

L'orifice d'admission de la pompe 2 est relié au réservoir 1 tandis que l'orifice de refoulement de la pompe 2 est relié à un orifice d'entrée 7 de la valve 3.

L'actionneur d'assistance 4 se présente d'une façon générale comme un vérin hydraulique double effet. Les deux chambres de l'actionneur 4 sont reliées respectivement à un orifice 8 et à un orifice 9 de la valve 3.

Un orifice de sortie 10 de la valve 3 est relié au réservoir 1.

La valve 3 constitue d'une façon générale un distributeur hydraulique double effet de commande de l'actionneur 4 : dans une position neutre, elle relie entre eux, d'une part, les orifices 7 et 10 et, d'autre part, les orifices 8 et 9 (absence d'assistance) ; dans des premières positions de travail, elle relie l'orifice 7 à l'orifice 8 avec une section de passage plus ou moins importante suivant l'effort d'assistance à fournir tandis qu'elle relie l'orifice 9 et l'orifice 10 (assistance dans une première direction) ; et dans des secondes positions de travail, elle relie l'orifice 7 à l'orifice 9 avec une section de passage plus ou moins importante suivant le degré d'assistance à fournir tandis qu'elle relie l'orifice 8 à l'orifice 10 (assistance dans l'autre direction).

La valve auxiliaire 5 présente un orifice d'entrée relié à l'orifice de refoulement de la pompe 2 et un orifice de sortie relié à un orifice d'entrée auxiliaire 11 de la valve 3.

L'orifice d'entrée du clapet 6 est relié à un orifice de sortie auxiliaire 12 de la valve 3 tandis que l'orifice de sortie du clapet 6 est relié au réservoir 1.

La valve auxiliaire 5 délivre à l'orifice 11 une pression plus ou moins importante suivant le degré d'assistance à fournir. En pratique, plus le véhicule circule vite, plus la pression délivrée par la valve 5 à l'orifice 11 est élevée et moins le degré d'assistance fourni par le système hydraulique est élevé.

L'orifice 12 débouche dans la même chambre de la valve 3 que l'orifice 11. Le clapet 6 permet d'éviter que cette chambre soit en surpression.

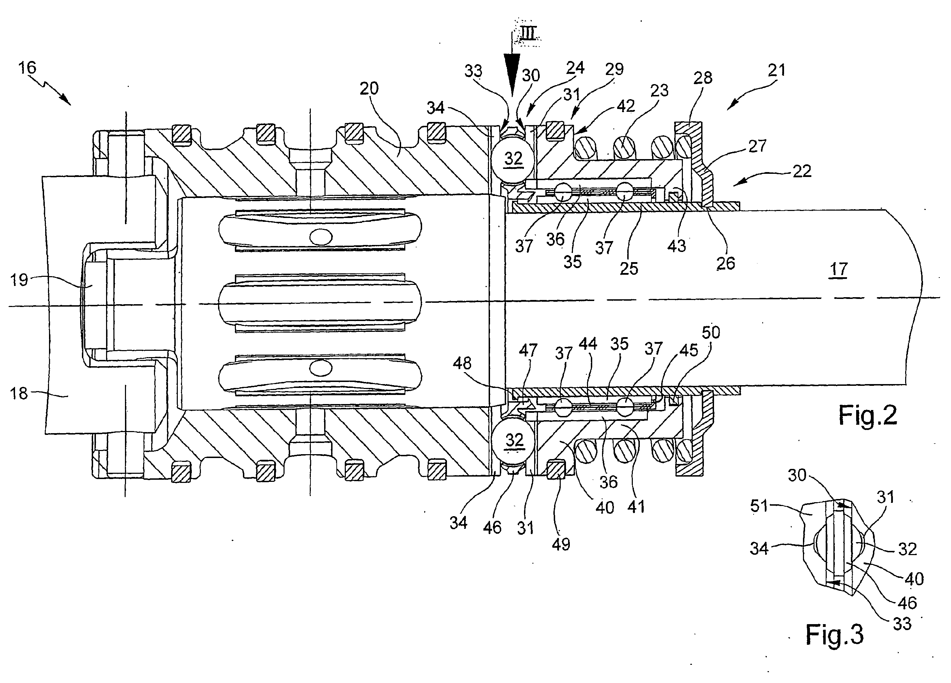

La valve 3 comporte un carter fixe ou stator 15 présentant une surface interne cylindrique. A l'intérieur du carter 15 est disposée une partie rotative ou rotor 16, illustré de façon isolée sur la figure 2, qui est mobile à rotation par rapport au carter 15 sur une amplitude angulaire prédéterminée de quelques tours.

La partie rotative 16 comporte un arbre d'entrée 17, un arbre de sortie 18, une barre de torsion 19 reliée rigidement respectivement à l'arbre d'entrée 17 et à l'arbre de sortie 18, une chemise 20 entourant l'arbre d'entrée 17 et reliée rigidement à l'arbre de sortie 18, et enfin un ensemble de liaison élastique 21 relié rigidement à l'arbre d'entrée 17 et coopérant à accouplement avec la chemise 20.

L'arbre d'entrée 17 est prévu pour être relié à une colonne de direction elle-même reliée à un volant de direction.

L'arbre de sortie 18 est relié à un pignon qui est ici prévu pour coopérer avec une crémaillère. En variante, l'arbre 18 est relié à un pignon prévu pour coopérer avec un autre élément qu'une crémaillère, par exemple une vis sans fin.

La surface latérale externe de la chemise 20 présente des rainures annulaires délimitant, avec le carter 15 et des joints annulaires d'étanchéité, des chambres dans lesquelles débouchent respectivement les orifices 7, 8 et 9.

L'intérieur de l'arbre 17 est creux, ce qui lui permet de loger la barre de torsion 19. L'espace interne à l'arbre 17 communique avec l'espace situé entre l'arbre 18 et le carter 15, l'orifice 10 débouchant dans ce dernier espace.

Des passages de fluide hydraulique sont ménagés entre la surface latérale externe et la surface latérale interne de la chemise 20. De même, des passages de fluide hydraulique sont ménagés entre la surface latérale externe et la surface latérale interne de l'arbre 17.

Des gorges et des lumières sont ménagées dans les portions en regard de la surface latérale interne de la chemise 20 et de la surface latérale externe de l'arbre 17 de sorte que, suivant la position relative angulaire entre l'arbre 17 et la chemise 20, les orifices 7, 8, 9 et 10 sont en communication les uns avec les autres ainsi qu'expliqué ci-dessus (absence d'assistance ou assistance dans un sens ou dans l'autre).

La position relative angulaire entre l'arbre d'entrée 17 et la chemise 20 dépend du couple exercé sur l'arbre d'entrée 17 par rapport à l'arbre de sortie 18, des caractéristiques d'élasticité de la barre de torsion 19 et de l'ensemble de liaison élastique 21 ainsi que de la pression délivrée par la valve auxiliaire 5.

L'arbre 17 et la chemise 20 restent dans la position neutre (absence d'assistance) tant que n'est pas atteint un seuil de couple prédéterminé, ce seuil étant fixé par les caractéristiques d'élasticité de l'ensemble 21 et par la pression délivrée par la valve 5.

Une fois que ce seuil est dépassé, il se produit un décalage angulaire entre l'arbre d'entrée 17 et la chemise 20 qui est dans le sens requis pour que l'actionneur d'assistance 4 agisse dans la bonne direction, cet écart angulaire, et donc l'intensité de l'effort d'assistance fourni, dépendant de l'intensité du couple exercé sur l'arbre d'entrée 17.

Comme on le voit plus particulièrement sur les figures 2, 4 et 5, l'ensemble de liaison élastique 21 comporte un manchon de support 22, un ressort 23 à élasticité axiale et un mécanisme d'accouplement 24 pour convertir le couple exercé sur l'arbre d'entrée 17 par rapport à l'arbre de sortie 18 en une force axiale agissant sur le ressort 23.

Le manchon de support 22 comporte une frette globalement tubulaire 25 entourant l'arbre d'entrée 17 et reliée rigidement à celui-ci. A l'opposé de la chemise 20, la frette 25 présente sur sa surface latérale externe une gorge annulaire 26 dans laquelle est engagée une bague 27 qui saille radialement vers l'extérieur à partir de la frette 25.

A sa périphérie, la bague 27 présente un rebord annulaire 28 orienté suivant la direction axiale, et saillant vers la chemise 20.

Le ressort à élasticité axiale 23 est ici un ressort de compression hélicoïdal en fil d'acier, dont le diamètre externe correspond sensiblement au diamètre interne du rebord 28.

Le mécanisme d'accouplement 24 comporte un manchon d'accouplement 29 monté à translation axiale, alors que tout autre mouvement relatif est interdit, vis-à-vis du manchon de support 22, et plus précisément vis-à-vis de la frette 25 du manchon 22.

Le manchon d'accouplement 29 présente une face transversale 30 regardant la chemise 20. Dans la face 30 sont ménagées des empreintes 31 logeant chacune une bille 32. Les empreintes 31 sont orientées suivant une direction radiale et ont un profil en V s'ouvrant vers la face 30.

La chemise 20 présente une face transversale 33 en regard de la face 30 du manchon 29. Dans la face 33 sont ménagées autant d'empreintes 34 qu'il y a d'empreintes 31, les empreintes 34 ayant la même conformation que les empreintes 31, c'est-à-dire orientées radialement avec un profil en V s'ouvrant vers la face 33.

Le ressort 23, qui est disposé entre le manchon 29 et la bague 27 du manchon 22, sollicite le manchon 29 vers la chemise 20.

Lorsque la position angulaire de la chemise 20 par rapport au manchon 29 est telle que chaque couple d'empreintes en regard 31 et 34 est aligné (position neutre illustrée sur les figures 1 à 3), la bille 32 se loge aussi profond que possible dans les empreintes 31 et 34, en étant en contact avec les deux facettes inclinées de chacune des empreintes 31 et 34.

Le manchon d'accouplement 29 est alors aussi rapproché que possible de la chemise 20.

Lorsqu'un décalage angulaire se produit entre la chemise 20 et le manchon 29 à partir de cette position, les empreintes 31 et 34 ne sont plus alignées et les billes 32 se déplacent de sorte qu'elles sont engagées moins profondément dans les empreintes 31 et 34.

Par conséquent, lorsqu'il se produit un décalage angulaire entre la chemise 20 et le manchon 29, il se produit en même temps un déplacement axial du manchon 29 par rapport à la chemise 20.

Le mécanisme d'accouplement 24 est ainsi à même, comme indiqué ci-dessus, de convertir le couple exercé sur l'arbre d'entrée 17 par rapport à l'arbre de sortie 18 en une force axiale agissant sur le ressort 23.

Tant que cette force axiale est inférieure à celle exercée par le ressort 23, à laquelle s'ajoute éventuellement la force résultant de l'exercice d'une pression délivrée par la valve auxiliaire 5, soit tant que le couple exercé sur l'arbre d'entrée 17 n'atteint pas un seuil prédéterminé, la chemise 20 et le manchon 29 restent dans la position neutre illustrée sur les figures 1 à 3.

Ce n'est qu'au-delà de ce seuil qu'il peut se produire un décalage angulaire entre la chemise 20 et le manchon 29.

Par conséquent, il ne peut se produire un décalage angulaire entre l'arbre 17 et la chemise 20, et donc se produire l'exercice d'un effort d'assistance par l'actionneur 4, que si le seuil de couple susmentionné exercé sur l'arbre 17 est franchi.

Cela permet au conducteur du véhicule d'avoir une sensation positive du centre (en anglais : *positive center feel*).

La portion de la frette 25 entourée par le manchon 29 présente dans sa face latérale externe des gorges 35 orientées axialement et ayant un profil en V s'ouvrant vers l'extérieur.

Les gorges 35 sont ménagées dans une portion annulaire saillante par rapport au reste de la surface latérale externe de la frette 25.

Le fond des gorges 35 est à fleur du reste de la surface latérale externe.

Dans la surface latérale interne du manchon 29 sont ménagées des gorges 36 orientées axialement et ayant chacune un profil en V s'ouvrant vers l'intérieur.

II y a autant de gorges 36 que de gorges 35. Chaque gorge 36 est alignée avec une gorge 35. Les gorges 36 et les gorges 35 ont le même profil, adapté à coopérer avec des billes 37, chacune logée dans une gorge 36 et dans la gorge 35 en regard, pour permettre un mouvement de translation axial entre la frette 25 et le manchon 29 et pour interdire tout autre mouvement, notamment de rotation, du manchon 29 par rapport à la frette 25.

Le manchon 29 est ici une pièce monobloc présentant une portion annulaire 40 et une portion tubulaire 41.

Les portions 40 et 41 ont globalement le même diamètre interne, mais le diamètre externe de la portion 40 est plus important que celui de la portion 41, le manchon 29 présentant entre la surface latérale externe de la portion 40 et la surface latérale externe de la portion 41 une surface transversale d'épaulement 42 qui est opposée à la surface transversale 30.

Le ressort 23 entoure la portion tubulaire 40 et prend appui, à son extrémité que l'on voit à gauche sur les dessins, sur la surface d'épaulement 42.

La portion tubulaire 41 présente, du côté que l'on voit à droite sur les dessins (côté opposé à la portion annulaire 40) un collet annulaire 43 qui saille vers l'intérieur à partir de la surface latérale interne.

Les gorges 36 sont ménagées sur toute la longueur de la portion annulaire 40 et s'étendent dans la portion tubulaire 41 jusqu'à proximité du collet 43.

Dans l'exemple illustré, le manchon 29 présente deux gorges 36 angulairement équidistantes (deux gorges 36 voisines sont distantes de 180°).

Chaque couple formé par une gorge 36 et par une gorge 35 loge deux billes 37, les billes 37 étant réparties suivant deux lignes radiales relativement distantes l'une de l'autre.

Pour maintenir en position les billes 37, il est prévu une cage 44 globalement tubulaire, mais présentant, du côté que l'on voit à droite sur les dessins, un collet 45 légèrement saillant vers l'intérieur.

Dans l'exemple illustré, il est prévu deux empreintes 31 angulairement équidistantes (deux empreintes 31 voisines sont distantes de 180°).

Les billes 32 sont ici maintenues par une cage 46.

La cage 46 présente, au niveau de sa surface latérale interne, un cran annulaire 47 qui saille axialement du côté que l'on voit à droite sur les dessins, le cran 47 étant disposé entre la surface latérale externe de la frette 25 et la surface latérale interne du manchon 29.

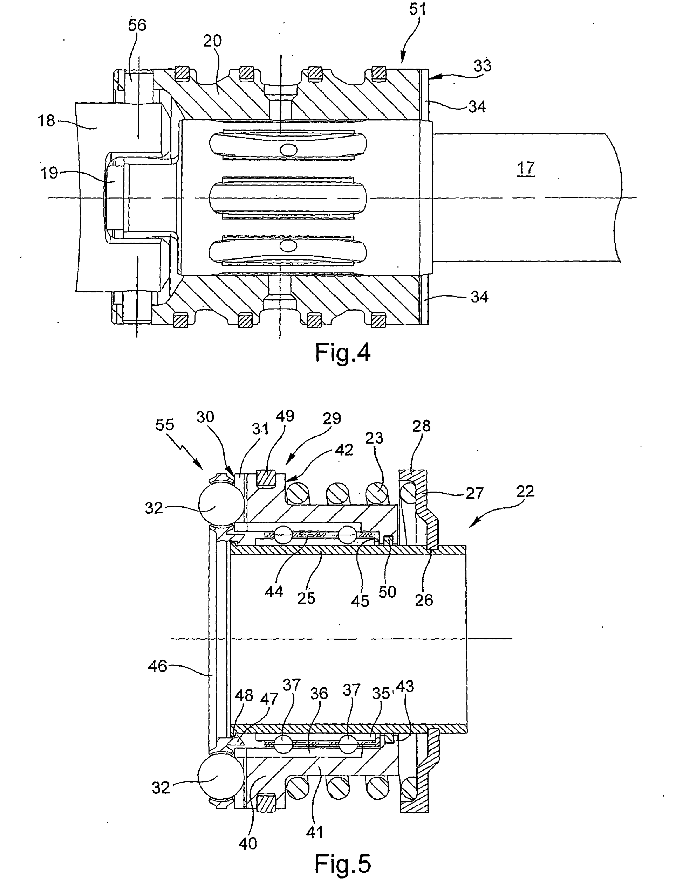

Le cran 47 sert à retenir la cage 46 à la frette 25, et plus généralement au module illustré sur la figure 5, la frette 25 présentant à cet effet, du côté que l'on voit à gauche, un collet 48 saillant vers l'extérieur.

Dans la surface latérale externe de la portion annulaire 40 du manchon 29 est ménagée une gorge annulaire de logement d'un joint d'étanchéité 49. De même, dans la surface latérale interne du collet 43 est ménagée une gorge dans laquelle est disposé un joint annulaire 50 en contact avec la surface latérale externe de la frette 25.

L'ensemble de liaison élastique 21, à l'exception de la portion annulaire d'extrémité 51 (figures 3 et 4) de la chemise 20 dans laquelle sont ménagées les empreintes 34, est mis en oeuvre grâce au module 55 illustré isolément sur la figure 5, ce module comportant le manchon 22 (frette 25 et bague 27), le ressort 23, le manchon 29 (portion annulaire 40, portion tubulaire 41 et joints 49 et 50), les billes 32 maintenues par la cage 46 et les billes 37 maintenues par la cage 44.

Pour assembler le module 55, on fait passer la frette 25 à l'intérieur de la cage 46 dans le sens allant de la gauche vers la droite de la figure 5 avec le côté où se trouve la gorge 26 qui passe le premier, on met en place sur les nervures 35 les billes 37 maintenues par la cage 44 avec le collet 45 qui se trouve du côté que l'on voit à droite, on met en place le manchon 29 avec la face 30 du côté des billes 32, en veillant à loger les billes 37 dans les gorges 36 et les billes 32 dans les empreintes 31, on dispose le ressort 23 autour de la portion annulaire 41 du manchon 29 puis l'on met en place la bague 27 dans la gorge 26, par déformation élastique.

Le module 55 est alors assemblé, les différentes pièces se maintenant les unes aux autres.

On notera que le bon fonctionnement du module 55 peut alors être testé, indépendamment du reste de la partie rotative 16.

On observera que le ressort 23 sollicite le manchon 29 de sorte que le collet 45 de la cage 44 est pris en sandwich entre le collet 43 et la partie annulaire en saillie où sont ménagées les gorges 35 tandis que la coopération entre le cran annulaire 47 et le collet 48 maintient la cage 46 et les billes 32 au reste du module 55.

Pour assembler la partie rotative 16 de la valve 3, on met en position l'un par rapport à l'autre l'arbre d'entrée 17 et l'arbre de sortie 18, auquel est déjà relié rigidement respectivement la barre de torsion 19 par emboîtement interne à l'arbre 18 et la chemise 20 par des goupilles 56, puis l'on détermine la position angulaire relative entre l'arbre d'entrée 17 et la chemise 20 qui correspond au centrage mécanique et hydraulique (position neutre susmentionnée où il y a absence d'assistance), on fige alors cette position relative angulaire en mettant en place une goupille (non illustrée) pour relier rigidement la barre de torsion 19 à l'arbre d'entrée 17.

On met ensuite en place le module 55 sur la partie de l'arbre 17 que l'on voit à droite de la chemise 20 sur les dessins, jusqu'à ce que les billes 32 soient chacune engagées dans une empreinte 34, ce qui centre angulairement le module 55 par rapport au reste de la partie rotative 16.

On ajuste alors la position axiale de la frette 25 par rapport à l'arbre 17, afin de régler la pré-tension du ressort 23 pour obtenir le seuil de couple susmentionné avant lequel les moyens de liaison élastique 21 assurent l'absence de mouvement angulaire entre l'arbre d'entrée 17 et la chemise 20. Lorsque le positionnement axial requis est atteint, on fixe rigidement la frette 25 sur l'arbre 17, ici par soudure.

On notera que le centrage angulaire du module 55 par rapport au reste de la partie 16 s'effectue automatiquement lors de l'assemblage, ce qui limite considérablement les risques que la valve 3 présente un défaut de centrage.

On met ensuite en place la partie rotative 16 dans le carter 15, ainsi que montré sur la figure 1.

La pression délivrée par la valve 5 s'applique à l'espace interne au carter 15 dans lequel se trouve notamment le ressort 23, alors que grâce aux joints 49 et 50, cette pression n'est pas présente du côté de la face 30 et à l'intérieur du manchon 29.

Il s'exerce donc, du fait de cette pression hydraulique, un effort sur le manchon 29, qui vient s'ajouter à celui exercé par le ressort 23.

Dans une variante non illustrée, il n'est pas prévu de valve auxiliaire 5, le seuil susmentionné de couple à appliquer à l'arbre 17 restant constant.

Dans d'autres variantes non illustrées, la portion annulaire 51 de la chemise 20 n'est pas d'un seul bloc avec le reste de celle-ci mais constitue une partie rapportée, fixée par exemple par soudage ou par sertissage périphérique ; la gorge logeant le joint 50 est ménagée dans la frette 25 plutôt que dans le manchon 29 ; le manchon 29 d'une seule pièce est remplacé par un manchon en deux ou davantage de pièces reliées rigidement les unes aux autres, par exemple une pièce formant la portion annulaire 40 et une pièce formant la portion tubulaire 41 ; le rebord 28 est à l'intérieur du ressort 23 plutôt qu'à l'extérieur ; le manchon 22 formé par la frette 25 et par la bague 27 est remplacé par un manchon monobloc ; les billes 32 et la cage 46 sont assemblées au reste du module 55 en dernier, par encliquetage grâce à la déformation élastique du cran 47 ; les billes 32 et la cage 46 ne font pas partie du module 55 ; le fond des empreintes 31 et 34 est arrondi et présente par exemple un rayon supérieur au diamètre des billes 32 de sorte que dans la position où le manchon d'accouplement 29 est rapproché au maximum de la chemise 20 les billes 32 portent sur le fond des empreintes 31 et 34 ; la frette 25 est fixée à l'arbre 17 autrement que par soudage, par exemple par sertissage ; et/ou un ou plusieurs roulements à billes ou à aiguilles sont interposés entre la chemise 20 et la portion de l'arbre d'entrée 17 qu'elle entoure pour les guider mutuellement à rotation.

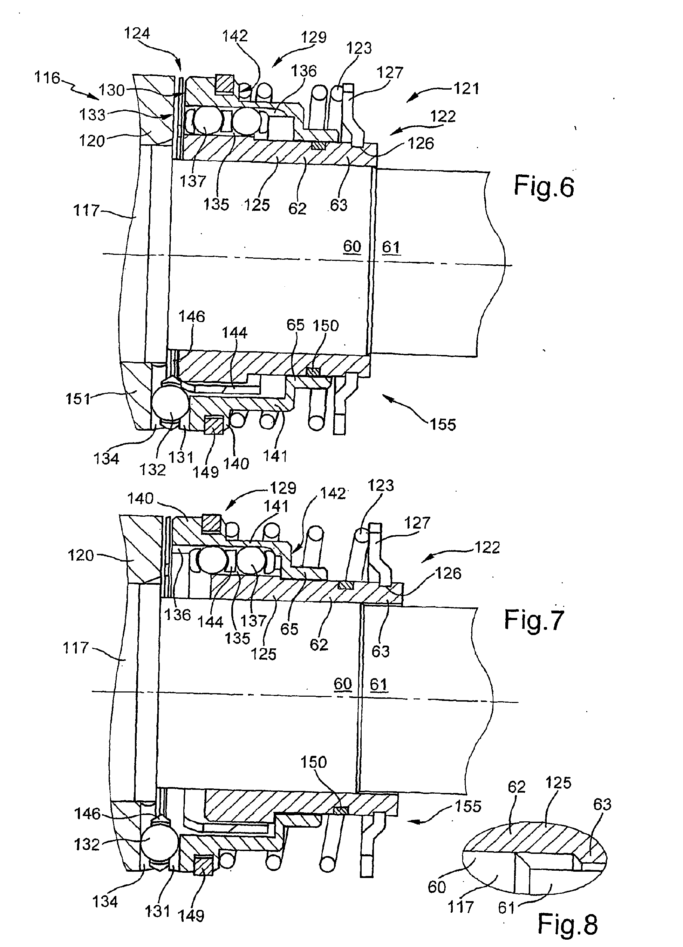

On va maintenant décrire la variante de la partie rotative de la valve hydraulique illustrée sur les figures 6 à 8.

On a gardé, pour les éléments semblables à ceux de la partie rotative 16, les mêmes références numériques auxquelles on a ajouté le nombre 100.

Dans la partie rotative 116, la partie de l'arbre d'entrée 117 que l'on voit à droite de la chemise 120 sur les dessins présente une surface latérale externe étagée : la portion 60 entourée par la frette 125 présente un diamètre externe plus grand que celui de la portion voisine 61 que l'on voit à droite de la portion 60 sur les dessins.

De même, la frette 125 présente une surface latérale interne étagée, les diamètres internes des portions 62 et 63 étant différents, au moins avant l'assemblage par emmanchement à force (en anglais : press *fit*) de la portion 63 sur la portion 60, pour effectuer la fixation rigide entre la frette 125 et l'arbre d'entrée 117, comme expliqué ci-après à l'appui des figures 7 et 8.

Les portions 60 et 61 de l'arbre 117 sont reliées par un chanfrein (voir la figure 8). De même, les portions 62 et 63 de la frette 125 sont reliées par un chanfrein.

On notera que la figure 8 est essentiellement explicative et n'est pas aux proportions. En particulier, les différences de diamètres sont exagérées.

Dans la configuration illustrée sur la figure 7, le chanfrein de la frette 125 situé entre les portions 62 et 63 est au contact du chanfrein situé à la jonction entre les parties 60 et 61 de l'arbre 117.

La portion d'emmanchement 63 est située entre la portion 62 et l'extrémité de la frette 125 que l'on voit à droite sur les dessins, c'est-à-dire l'extrémité opposée à la chemise 120. La portion 62 est située entre la portion 63 et l'extrémité de la frette 125 que l'on voit à gauche sur les dessins, c'est-à-dire l'extrémité située du côté de la chemise 120.

Le diamètre externe de la portion 60 et le diamètre interne de la portion 62 sont semblables de sorte que les portions 60 et 62 peuvent glisser et tourner l'une par rapport à l'autre en étant guidées mutuellement de façon relativement précise.

La portion 63 de la frette 125 présente un diamètre interne plus petit, au moins avant emmanchement, que le diamètre externe de la portion 60 et plus grand que le diamètre externe de la portion 61.

Ici, la différence de diamètre entre les portions 60 et 63 est de l'ordre d'un dixième de millimètre et la longueur de la portion 63 (dimension suivant la direction axiale) est de l'ordre de quatre millimètres.

Alors que le manchon d'accouplement 29 présente une portion tubulaire 41 munie d'un collet annulaire 43, le manchon d'accouplement 129 comporte une portion 65 à section en L se raccordant à la portion tubulaire 141 à l'opposé de la portion annulaire 140.

La partie tubulaire de la portion 65 présente un diamètre interne correspondant au diamètre externe de la frette 125 en dehors de la surépaisseur annulaire où sont ménagées les gorges 135.

Ainsi, la portion 65 peut coopérer à étanchéité avec le joint 150, qui est installé dans une gorge de la frette 125, tandis que la surépaisseur où sont ménagées les gorges 135 sert de butée pour le manchon 129, l'empêchant d'aller, sous l'effet du ressort 123, au-delà de la position illustrée sur la figure 7.

On notera que dans cette position le manchon d'accouplement 129 saille du manchon de support 122 sur une longueur (distance suivant la direction axiale) semblable et en tout cas au moins égale, à la longueur de la portion 63. Cela est utile aux opérations d'assemblage entre le module 155 et le reste de la partie rotative 116.

L'ensemble de liaison élastique 121 présente diverses autres modalités d'exécution différentes de celles mises en oeuvre dans l'ensemble 21.

Ainsi, les billes 132 et les empreintes 131 et 134 associées sont au nombre de trois (et non de deux) ; il y a trois (et non deux) couples de billes 137 et de gorges 135 et 136 associées ; et la bague 127 ne comporte pas de rebord annulaire tel que le rebord 28.

A l'état assemblé, le module 155 est dans la position d'attente illustrée sur la figure 7, c'est-à-dire avec le manchon d'accouplement 129 qui est en butée, par sa portion 65, contre la surépaisseur dans laquelle sont ménagées les gorges 135.

L'assemblage de la partie rotative 116 se fait comme l'assemblage de la partie rotative 16, sauf en ce qui concerne la fixation rigide entre la frette 125 et l'arbre 117.

C'est dans sa configuration d'attente que le module 155 est mis en place sur la partie de l'arbre 117 que l'on voit à droite de la chemise 120 sur les dessins, jusqu'à ce que les billes 132 soient chacune engagées dans une empreinte 134, ce qui centre angulairement le module 155 par rapport au reste de la partie rotative 116.

L'ajustement de la position axiale de la frette 125 par rapport à l'arbre 117 est ensuite effectué à la presse, à la fois pour fixer rigidement la frette 125 sur l'arbre 117 et pour régler la pré-tension du ressort 123.

L'emmanchement à force entre l'arbre 117 et la frette 125 s'effectue au niveau de la portion 63, du fait des différences de diamètres susmentionnées.

Cet assemblage par emmanchement à force est particulièrement avantageux car il est simple à mettre en oeuvre et évite les risques et les contraintes liés à la soudure (absence d'huile, de graisse et d'autres contaminations, risques de déformation dus à la chaleur localisée lors du processus de soudure, ...).

En variante, l'emmanchement entre les parties 60 et 63 ne s'effectue pas uniquement par la force d'une presse, mais aussi grâce à une dilatation par chauffage, suivi bien entendu d'une rétractation (en anglais : *shrinkage)* au refroidissement.

De nombreuses autres variantes sont possibles en fonction des circonstances, pour autant qu'elles ne sortent pas du cadre de l'invention telle que défini dans les revendications.

## Revendications

1. Valve de direction pour commander l'alimentation hydraulique d'un actionneur d'assistance (4), comportant :
- un arbre d'entrée (17 ; 117) ;
- un arbre de sortie (18) ;
- une barre de torsion (19) reliée rigidement respectivement audit arbre d'entrée (17 ; 117) et audit arbre de sortie (18) ;
- une chemise (20 ; 120) entourant ledit arbre d'entrée (17 ; 117) et reliée rigidement audit arbre de sortie (18) ; et
- un ensemble de liaison élastique (21 ; 121) relié rigidement audit arbre d'entrée (17 ; 117) et coopérant à accouplement avec ladite chemise (20 ; 120) pour assurer l'absence de mouvement relatif angulaire entre ledit arbre d'entrée (17 ; 117) et ladite chemise (20 ; 120) avant qu'un seuil prédéterminé de couple soit exercé sur ledit arbre d'entrée (17; 117) par rapport audit arbre de sortie (18), ledit ensemble de liaison élastique (21 ; 121) comportant :
un manchon de support (22 ; 122) relié rigidement audit arbre d'entrée (17 ; 117) ;
un ressort (23 ; 123) à élasticité axiale ; et
un mécanisme d'accouplement (24 ; 124) pour convertir le couple exercé sur ledit arbre d'entrée (17 ; 117) par rapport audit arbre de sortie (18) en une force axiale agissant sur ledit ressort (23 ; 123), ledit mécanisme d'accouplement (24; 124) comportant un manchon d'accouplement (29 ; 129) présentant une face transversale (30 ; 130), regardant la chemise (20 ; 120), dans laquelle sont ménagées des empreintes (31 ; 131) de logement de billes (32 ; 132), ledit ressort (23 ; 123) étant disposé entre ledit manchon d'accouplement (29 ; 129) et ledit manchon de support (22 ; 122), ledit ressort (23 ; 123) sollicitant ledit manchon d'accouplement (29 ; 129) vers ladite chemise (20 ; 120) ;
**caractérisée en ce que** :
- ledit manchon de support (22 ; 122) comporte une portion (25 ; 125) entourée par ledit manchon d'accouplement (29 ; 129) ; et
- des moyens de montage à translation axiale (35 - 37 ; 135 - 137), interdisant tout autre mouvement relatif, sont prévus entre ladite portion entourée (25 ; 125) du manchon de support (22 ; 122) et ledit manchon d'accouplement (29 ; 129).

2. Valve selon la revendication 1, **caractérisée en ce que** ledit manchon de support (22 ; 122) comporte une frette globalement tubulaire (25 ; 125) entourant l'arbre d'entrée (17 ; 117), ladite portion du manchon de support (22 ; 122) entourée par ledit manchon d'accouplement (29 ; 129) appartenant à ladite frette (25 ; 125).

3. Valve selon la revendication 2, **caractérisée en ce que** lesdits moyens de montage à translation axiale comportent, sur la face latérale externe de ladite frette (25 ; 125), des gorges (35 ; 135) orientées axialement chacune adaptée à coopérer avec des billes (37 ; 137).

4. Valve selon la revendication 3, **caractérisée en ce que** ledit manchon d'accouplement (29 ; 129) présente une face latérale interne dans laquelle sont ménagées des gorges orientées axialement semblables aux gorges (35 ; 135) de ladite frette (25 ; 125), lesdites billes (37 ; 137) étant chacune engagée dans une gorge (36 ; 136) du manchon d'accouplement (29 ; 129) et dans une gorge (35 ; 135) de ladite frette (25 ; 125).

5. Valve selon l'une quelconque des revendications 2 à 4, **caractérisée en ce que** ledit manchon de support (22 ; 122) comporte, à l'opposé de ladite chemise (20 ; 120), une bague (27 ; 127) qui saille radialement vers l'extérieur à partir de ladite frette (25 ; 125).

6. Valve selon la revendication 5, **caractérisée en ce que** ladite bague (27 ; 127) est engagée dans une gorge annulaire (26 ; 126) ménagée dans la surface latérale externe de ladite frette (25 ; 125).

7. Valve selon l'une quelconque des revendications 5 ou 6, **caractérisée en ce que** ladite bague (27) présente à sa périphérie un rebord annulaire (28) orienté suivant la direction axiale et saillant vers ladite chemise (20).

8. Valve selon l'une quelconque des revendications 5 à 7, **caractérisée en ce que** ledit ressort (23 ; 123) à élasticité axiale prend appui par une extrémité sur ladite bague (27 ; 127).

9. Valve selon l'une quelconque des revendications 1 à 8, **caractérisée en ce que** ledit manchon d'accouplement (29 ; 129) présente une portion annulaire (40 ; 140) et une portion tubulaire (41 ; 141) ayant globalement le même diamètre interne, le diamètre externe de la portion annulaire (40 ; 140) étant plus important que celui de la portion tubulaire (41 ; 141), avec une surface transversale d'épaulement (42 ; 142) entre la surface latérale externe de la portion annulaire (40 ;140) et la surface latérale externe de la portion tubulaire (41 ; 141).

10. Valve selon la revendication 9, **caractérisée en ce que** ladite surface d'épaulement (42 ; 142) est opposée à ladite face transversale (30 ; 130) dans laquelle sont ménagées des empreintes (31 ; 131), ledit ressort (23 ; 123) à élasticité axiale prenant appui par une extrémité sur ladite surface transversale d'épaulement (42 ; 142).

11. Valve selon l'une quelconque des revendications 9 ou 10, **caractérisée en ce que** ledit manchon d'accouplement (29 ; 129) présente, dans la surface latérale externe de ladite portion annulaire (40 ; 140), une gorge annulaire de logement d'un joint d'étanchéité (49 ; 149).

12. Valve selon l'une quelconque des revendications 9 à 11, **caractérisée en ce que** la portion tubulaire (41) dudit manchon d'accouplement (29) présente, à l'opposé de ladite portion annulaire (40), un collet annulaire (43) qui saille vers l'intérieur à partir de la surface latérale interne du manchon d'accouplement (29).

13. Valve selon la revendication 12, **caractérisée en ce que** la surface latérale interne dudit collet (43) présente une gorge annulaire de logement d'un joint d'étanchéité (50).

14. Valve selon l'une quelconque des revendications 1 à 13, **caractérisée en ce que** ledit manchon de support (22) est relié rigidement audit arbre d'entrée (17) par soudure.

15. Valve selon l'une quelconque des revendications 1 à 13, **caractérisée en ce que** ledit manchon de support (122) est relié rigidement audit arbre d'entrée (117) par emmanchement à force.

16. Valve selon la revendication 15, **caractérisée en ce que** ledit arbre d'entrée (117) présente un diamètre externe plus grand dans une portion (60) entourée par ledit manchon de support (122) que dans une portion voisine (61) non entourée par ledit manchon de support (122) tandis que ledit manchon de support (122) présente un diamètre interne plus petit dans une portion d'emmanchement (63) que dans une portion (62) voisine de ladite portion d'emmanchement, ladite portion d'emmanchement (63) dudit manchon de support (122) étant emmanché à force sur ladite portion à plus grand diamètre (60) dudit arbre (117).

17. Valve selon la revendication 16, **caractérisée en ce que** ladite portion d'emmanchement (63) du manchon de support (122) est moins longue que ladite portion à plus grand diamètre (60) dudit arbre d'entrée (117).

18. Valve selon la revendication 17, **caractérisée en ce que** ladite portion d'emmanchement (63) est située entre ladite portion voisine (62) dudit manchon de support (122) et l'extrémité dudit manchon de support (122) opposée à ladite chemise (120).

19. Module pour valve de direction selon l'une quelconque des revendications 1 à 18, comportant :
- un manchon de support (22 ; 122) ;
- un ressort (23 ; 123) à élasticité axiale ; et
- un manchon d'accouplement (29 ; 129) présentant une face transversale (30 ; 130) dans laquelle sont ménagées des empreintes (31 ; 131) pour loger des billes (32 ; 132), ledit ressort étant disposé entre ledit manchon d'accouplement (29 ; 129) et ledit manchon de support (22 ; 122), ledit ressort (23 ; 123) sollicitant ledit manchon d'accouplement (29 ; 129) vers le côté que regarde ladite face transversale (30 ; 130) ;
**caractérisé en ce que** :
- ledit manchon de support (22 ; 122) comporte une portion (25 ; 125) entourée par ledit manchon d'accouplement ; et
- des moyens de montage à translation axiale (35 - 37 ; 135 -137), interdisant tout autre mouvement relatif, sont prévus entre ladite portion entourée (25 ; 125) du manchon de support (22 ; 122) et ledit manchon d'accouplement (29 ; 129).

20. Module selon la revendication 19, **caractérisé en ce que** ledit manchon de support (22 ; 122) comporte une frette globalement tubulaire (25 ; 125) entourant l'arbre d'entrée (17 ; 117), ladite portion du manchon de support (22 ; 122) entourée par ledit manchon d'accouplement (29 ; 129) appartenant à ladite frette (25 ; 125).

21. Module selon la revendication 20, **caractérisé en ce que** lesdits moyens de montage à translation axiale comportent, sur la face latérale externe de ladite frette (25 ; 125), des gorges (35 ; 135) orientées axialement chacune adaptée à coopérer avec des billes (37 ; 137).

22. Module selon la revendication 21, **caractérisé en ce que** ledit manchon d'accouplement (29 ; 129) présente une face latérale interne dans laquelle sont ménagées des gorges orientées axialement semblables aux gorges (35 ; 135) de ladite frette (25 ; 125), lesdites billes (37 ; 137) étant chacune engagée dans une gorge (36 ; 136) du manchon d'accouplement (29 ; 129) et dans une gorge de ladite frette (25 ; 125).

23. Module selon la revendication 22, **caractérisé en ce qu'**il comporte une cage (44 ; 144) de maintien en position desdites billes (37 ; 137).

24. Module selon la revendication 23, **caractérisé en ce que** ladite cage (44) est globalement tubulaire et présente, du côté opposé à celui que regarde ladite face transversale (30), un collet (45) saillant vers l'intérieur.

25. Module selon l'une quelconque des revendications 20 à 24, **caractérisé en ce que** ledit manchon de support (22 ; 122) comporte, à l'opposé de ladite chemise (20 ; 120), une bague (27 ; 127) qui saille radialement vers l'extérieur à partir de ladite frette (25 ; 125).

26. Module selon la revendication 25, **caractérisé en ce que** ladite bague (27 ; 127) est engagée dans une gorge annulaire (26 ; 126) ménagée dans la surface latérale externe de ladite frette (25 ; 125).

27. Module selon l'une quelconque des revendications 25 ou 26, **caractérisé en ce que** ladite bague (27) présente à sa périphérie un rebord annulaire (28) orienté suivant la direction axiale et saillant vers ladite chemise (20).

28. Module selon l'une quelconque des revendications 25 à 27, **caractérisé en ce que** ledit ressort (23 ; 123) à élasticité axiale prend appui par une extrémité sur ladite bague (27 ; 127).

29. Module selon l'une quelconque des revendications 19 à 28, **caractérisé en ce que** ledit manchon d'accouplement (29 ; 129) présente une portion annulaire (40 ; 140) et une portion tubulaire (41 ; 141) ayant globalement le même diamètre interne, le diamètre externe de la portion annulaire (40 ; 140) étant plus important que celui de la portion tubulaire (41 ; 141), avec une surface transversale d'épaulement (42 ; 142) entre la surface latérale externe de la portion annulaire (40 ; 140) et la surface latérale externe de la portion tubulaire (41 ; 141).

30. Module selon la revendication 29, **caractérisé en ce que** ladite surface d'épaulement (42 ; 142) est opposée à ladite face transversale (30 ; 130) dans laquelle sont ménagées des empreintes (31 ; 131), ledit ressort (23 ; 123) à élasticité axiale prenant appui par une extrémité sur ladite surface transversale d'épaulement (42 ; 142).

31. Module selon l'une quelconque des revendications 29 ou 30, **caractérisé en ce que** ledit manchon d'accouplement (29 ; 129) présente, dans la surface latérale externe de ladite portion annulaire (40 ; 140), une gorge annulaire de logement d'un joint d'étanchéité (49 ; 149).

32. Module selon l'une quelconque des revendications 29 à 31, **caractérisé en ce que** la portion tubulaire (41) dudit manchon d'accouplement (29) présente, à l'opposé de ladite portion annulaire (40), un collet annulaire (43) qui saille vers l'intérieur à partir de la surface latérale interne du manchon d'accouplement (29).

33. Module selon la revendication 32, **caractérisé en ce que** la surface latérale interne dudit collet (43) présente une gorge annulaire de logement d'un joint d'étanchéité (50).

34. Module selon l'une quelconque des revendications 19 à 33, **caractérisé en ce que** ledit manchon de support (122) présente un diamètre interne plus petit dans une portion d'emmanchement (63) que dans une portion (62) voisine de ladite portion d'emmanchement.

35. Module selon la revendication 34, **caractérisé en ce que** ladite portion d'emmanchement (63) du manchon de support (122) est moins longue que ladite portion voisine (62) du manchon de support (122).

36. Module selon la revendication 35, **caractérisé en ce que** ladite portion d'emmanchement (63) est située entre ladite portion voisine (62) dudit manchon de support et l'extrémité dudit manchon de support (122) opposée à ladite face transversale (130) dudit manchon d'accouplement (129).

37. Module selon l'une quelconque des revendications 34 à 36, **caractérisé en ce qu'**il admet qu'une position d'attente où le manchon d'accouplement (129) est en butée sous l'effet dudit ressort (123) et saille du manchon de support (122) sur une longueur au moins égale à la longueur de ladite portion d'emmanchement (63).

## Claims

1. Steering valve for controlling the supply of hydraulic fluid to an assistance actuator (4), including:
- an input shaft (17; 117);
- an output shaft (18);
- a torsion bar (19) rigidly connected to said input shaft (17; 117) and to said output shaft (18);
- a shell (20; 120) around said input shaft (17; 117) and connected rigidly to said output shaft (18); and
- an elastic connecting assembly (21; 121) rigidly connected to said input shaft (17; 117) and cooperating coupling fashion with said shell (20; 120) to prevent relative angular movement between said input shaft (17; 117) and said shell (20; 120) before a predetermined threshold torque is applied to said input shaft (17; 117) relative to said output shaft (18), said elastic connecting assembly (21; 121) including:
a support sleeve (22; 122) connected rigidly to said input shaft (17; 117);
an axial spring (23; 123); and
a coupling mechanism (24; 124) for converting the torque applied to said input shaft (17; 117) relative to said output shaft (18) into an axial force acting on said spring (23; 123), said coupling mechanism (24; 124) including a coupling sleeve (29; 129) having a transverse face (30; 130), facing the shell (20; 120), in which are provided imprints (31; 131) for housing balls (32; 132), said spring (23; 123) being disposed between said coupling sleeve (29; 129) and said support sleeve (22; 122), said spring (23; 123) urging said coupling sleeve (29; 129) toward said shell (20; 120);
**characterised in that**:
- said support sleeve (22; 122) includes a portion (25; 125) surrounded by said coupling sleeve (29; 129); and
- axial translation mounting means (35 - 37; 135 - 137) preventing any other relative movement are provided between said surrounded portion (25; 125) of the support sleeve (22; 122) and said coupling sleeve (29; 129).

2. Valve according to claim 1, **characterised in that** said support sleeve (22; 122) includes a globally tubular hoop (25; 125) around the input shaft (17; 117), said support sleeve portion (22; 122) surrounded by said coupling sleeve (29; 129) being part of said hoop (25; 125).

3. Valve according to claim 2, **characterised in that** said axial translation mounting means include, on the external lateral face of said hoop (25; 125), axially oriented grooves (35; 135) each adapted to cooperate with balls (37; 137).

4. Valve according to claim 3, **characterised in that** said coupling sleeve (29; 129) has an internal lateral face in which are provided axially oriented grooves similar to the grooves (35; 135) of said hoop (25; 125), said balls (37; 137) being each engaged in a groove (36; 136) of the coupling sleeve (29; 129) and in a groove (35; 135) of said hoop (25; 125).

5. Valve according to any one of claims 2 to 4, **characterised in that** said support sleeve (22; 122) includes, opposite said shell (20; 120), a ring (27; 127) that projects radially outwards from said hoop (25; 125).

6. Valve according to claim 5, **characterised in that** said ring (27; 127) is engaged in an annular groove (26; 126) provided on the external lateral surface of said hoop (25; 125).

7. Valve according to either of claims 5 or 6, **characterised in that** said ring (27) has at its periphery an annular rim (28) oriented in the axial direction and projecting toward said shell (20).

8. Valve according to any one of claims 5 to 7, **characterised in that** said axial spring (23; 123) bears at one end on said ring (27; 127).

9. Valve according to any one of claims 1 to 8, **characterised in that** said coupling sleeve (29; 129) has an annular portion (40; 140) and a tubular portion (41; 141) having globally the same inside diameter, the outside diameter of the annular portion (40; 140) being greater than that of the tubular portion (41; 141), with a transverse shoulder surface (42; 142) between the external lateral surface of the annular portion (40; 140) and the external lateral surface of the tubular portion (41; 141).

10. Valve according to claim 9, **characterised in that** said shoulder surface (42; 142) is opposite said transverse face (30; 130) in which imprints (31; 131) are provided, said axial spring (23; 123) bearing at one end on said transverse shoulder surface (42; 142).

11. Valve according to either of claims 9 or 10, **characterised in that** said coupling sleeve (29; 129) has, on the external lateral surface of said annular portion (40; 140), an annular groove for accommodating a seal (49; 149).

12. Valve according to any one of claims 9 to 11, **characterised in that** the tubular portion (41) of said coupling sleeve (29) has opposite said annular portion (40) an annular flange (43) that projects inwards from the internal lateral surface of the coupling sleeve (29).

13. Valve according to claim 12, **characterised in that** the internal lateral surface of said flange (43) has an annular groove for accommodating a seal (50).

14. Valve according to any one of claims 1 to 13, **characterised in that** said support sleeve (22) is rigidly welded to said input shaft (17).

15. Valve according to any one of claims 1 to 13,
**characterised in that** said support sleeve (122) is a rigid force fit on said input shaft (117).

16. Valve according to claim 15, **characterised in that** said input shaft (117) has an outside diameter in a portion (60) surrounded by said support sleeve (122) larger than in an adjacent portion (61) not surrounded by said support sleeve (122), whereas said support sleeve (122) has an inside diameter in a sleeving portion (63) smaller than in a portion (62) adjacent to said sleeving portion, said sleeving portion (63) of said support sleeve (122) being a force fit on said larger diameter portion (60) of said shaft (117).

17. Valve according to claim 16, **characterised in that** said sleeving portion (63) of the support sleeve (122) is shorter than said greater diameter portion (60) of said input shaft (117).

18. Valve according to claim 17, **characterised in that** said sleeving portion (63) is situated between said portion (62) adjacent to said support sleeve (122) and the end of said support sleeve (122) opposite said shell (120).

19. Module for steering valve according to any one of claims 1 to 18, including:
- a support sleeve (22; 122);
- an axial spring (23; 123); and
- a coupling sleeve (29, 129) having a transverse face (30; 130) in which are provided imprints (31; 131) for accommodating balls (32; 132), said spring being disposed between said coupling sleeve (29; 129) and said support sleeve (22; 122), said spring (23; 123) urging said coupling sleeve (29; 129) toward the side that said transverse face (30; 130) faces;
**characterised in that**:
- said support sleeve (22; 122) includes a portion (25; 125) surrounded by said coupling sleeve; and
- axial translation mounting means (35 - 37; 135 - 137) preventing any other relative movement are provided between said surrounded portion (25; 125) of the support sleeve (22; 122) and said coupling sleeve (29; 129).

20. Module according to claim 19, **characterised in that** said support sleeve (22; 122) includes a globally tubular hoop (25; 125) around the input shaft (17; 117), said portion of the support sleeve (22; 122) surrounded by said coupling sleeve (29; 129) being part of said hoop (25; 125).

21. Module according to claim 20, **characterised in that** said axial translation mounting means include, on the external lateral face of said hoop (25; 125), grooves (35; 135) oriented axially and each adapted to cooperate with balls (37; 137).

22. Module according to claim 21, **characterised in that** said coupling sleeve (29; 129) has an internal lateral face on which are provided axially oriented grooves similar to the grooves (35; 135) of said hoop (25; 125), said balls (37; 137) being each engaged in a groove (36; 136) of the coupling sleeve (29; 129) and in a groove of said hoop (25; 125).

23. Module according to claim 22, **characterised in that** it includes a cage (44; 144) for holding said balls (37; 137) in position.

24. Module according to claim 23, **characterised in that** said cage (44) is globally tubular and has on the side opposite that facing said transverse face (30) a flange (45) projecting inwards.

25. Module according to any one of claims 20 to 24, **characterised in that** said support sleeve (22; 122) includes, opposite said shell (20; 120), a ring (27; 127) that projects radially outwards from said hoop (25; 125).

26. Module according to claim 25, **characterised in that** said ring (27; 127) is engaged in an annular groove (26; 126) provided on the external lateral surface of said hoop (25; 125).

27. Module according to either of claims 25 or 26, **characterised in that** said ring (27) has at its periphery an annular rim (28) oriented in the axial direction and projecting toward said shell (20).

28. Module according to any one of claims 25 to 27, **characterised in that** said axial spring (23; 123) bears at one end on said ring (27; 127).

29. Module according to any one of claims 19 to 28, **characterised in that** said coupling sleeve (29; 129) has an annular portion (40; 140) and a tubular portion (41; 141) having globally the same inside diameter, the outside diameter of the annular portion (40; 140) being greater than that of the tubular portion (41; 141), with a transverse shoulder surface (42; 142) between the external lateral surface of the annular portion (40; 140) and the external lateral surface of the tubular portion (41; 141).

30. Module according to claim 29, **characterised in that** said shoulder surface (42; 142) is opposite said transverse face (30; 130) on which are formed imprints (31; 131), said axial spring (23; 123) bearing at one end on said transverse shoulder surface (42; 142).

31. Module according to either of claims 29 or 30, **characterised in that** said coupling sleeve (29; 129) has, on the external lateral surface of said annular portion (40; 140), an annular groove for accommodating a seal (49; 149).

32. Module according to any one of claims 29 to 31, **characterised in that** the tubular portion (41) of said coupling sleeve (29) has, opposite said annular portion (40), an annular flange (43) that projects inwards from the internal lateral surface of the coupling sleeve (29).

33. Module according to claim 32, **characterised in that** the internal lateral surface of said flange (43) includes an annular groove for accommodating a seal (50).

34. Module according to any one of claims 19 to 33, **characterised in that** said support sleeve (122) has an inside diameter in a sleeving portion (63) smaller than in a portion (62) adjacent to said sleeving portion.

35. Module according to claim 34, **characterised in that** said sleeving portion (63) of the support sleeve (122) is shorter than said adjacent portion (62) of the support sleeve (122).

36. Module according to claim 35, **characterised in that** said sleeving portion (63) is situated between said adjacent portion (62) of said support sleeve and the end of said support sleeve (122) opposite said transverse face (130) of said coupling sleeve (129).

37. Module according to any one of claims 34 to 36, **characterised in that** it has a waiting position in which the coupling sleeve (129) is held in an abutment position by said spring (123) and projects from the support sleeve (122) over a length at least equal to the length of said sleeving portion (63).

## Patentansprüche

1. Lenkventil zur Steuerung der Hydraulikversorgung eines Servostellantriebs (4), das aufweist:
- eine Antriebswelle (17; 117);
- eine Abtriebswelle (18);
- eine Drehstabfeder (19), die starr mit der Antriebswelle (17; 117) bzw. mit der Abtriebswelle (18) verbunden ist;
- eine Hülse (20; 120), die die Antriebswelle (17; 117) umgibt und starr mit der Abtriebswelle (18) verbunden ist; und
- eine elastische Verbindungseinheit (21; 121), die starr mit der Antriebswelle (17; 117) verbunden ist und kuppelnd mit der Hülse (20; 120) zusammenwirkt, um die Abwesenheit einer relativen Winkelbewegung zwischen der Antriebswelle (17; 117) und der Hülse (20; 120) zu gewährleisten, ehe eine vorbestimmte Drehmomentschwelle auf die Antriebswelle (17; 117) bezüglich der Abtriebswelle (18) ausgeübt wird, wobei die elastische Verbindungseinheit (21; 121) aufweist:
- eine Stützmuffe (22; 122), die starr mit der Antriebswelle (17; 117) verbunden ist;
- eine Feder (23; 123) mit axialer Elastizität; und
- einen Kupplungsmechanismus (24; 124), um das auf die Antriebswelle (17; 117) bezüglich der Abtriebswelle (18) ausgeübte Drehmoment in eine axiale Kraft umzuwandeln, die auf die Feder (23; 123) wirkt, wobei der Kupplungsmechanismus (24; 124) eine Kupplungsmuffe (29; 129) aufweist, die eine der Hülse (20; 120) gegenüber liegende Querseite (30; 130) besitzt, in der Einbuchtungen (31; 131) zur Aufnahme von Kugeln (32; 132) ausgebildet sind, wobei die Feder (23; 123) zwischen der Kupplungsmuffe (29; 129) und der Stützmuffe (22; 122) angeordnet ist, wobei die Feder (23; 123) die Kupplungsmuffe (29; 129) zur Hülse (20; 120) hin beaufschlagt;
**dadurch gekennzeichnet, dass**:
- die Stützmuffe (22; 122) einen Abschnitt (25; 125) aufweist, der von der Kupplungsmuffe (29; 129) umgeben ist; und
- Montagemittel mit axialer Translationsbewegung (35-37; 135-137), die jede andere relative Bewegung verhindern, zwischen dem umgebenen Abschnitt (25; 125) der Stützmuffe (22; 122) und der Kupplungsmuffe (29; 129) vorgesehen sind.

2. Ventil nach Anspruch 1, **dadurch gekennzeichnet, dass** die Stützmuffe (22; 122) einen global rohrförmigen Mantelring (25; 125) aufweist, der die Antriebswelle (17; 117) umgibt, wobei der von der Kupplungsmuffe (29; 129) umgebene Abschnitt der Stützmuffe (22; 122) zu diesem Mantelring (25; 125) gehört.

3. Ventil nach Anspruch 2, **dadurch gekennzeichnet, dass** die Montagemittel mit axialer Translationsbewegung auf der äußeren Seitenfläche des Mantelrings (25; 125) axial ausgerichtete Nuten (35; 135) aufweisen, die je geeignet sind, um mit Kugeln (37; 137) zusammenzuwirken.

4. Ventil nach Anspruch 3, **dadurch gekennzeichnet, dass** die Kupplungsmuffe (29; 129) eine innere Seitenfläche aufweist, in der axial ausgerichtete Nuten gleich den Nuten (35; 135) des Mantelrings (25; 125) ausgebildet sind, wobei die Kugeln (37; 137) je in eine Nut (36; 136) der Kupplungsmuffe (29; 129) und in eine Nut (35; 135) des Mantelrings (25; 125) eingeführt sind.

5. Ventil nach einem der Ansprüche 2 bis 4, **dadurch gekennzeichnet, dass** die Stützmuffe (22; 122) entgegengesetzt zur Hülse (20; 120) einen Ring (27; 127) aufweist, der ausgehend von dem Mantelring (25; 125) radial nach außen vorsteht.

6. Ventil nach Anspruch 5, **dadurch gekennzeichnet, dass** der Ring (27; 127) in eine Ringnut (26; 126) eingeführt ist, die in der äußeren Seitenfläche des Mantelrings (25; 125) ausgebildet ist.

7. Ventil nach einem der Ansprüche 5 oder 6, **dadurch gekennzeichnet, dass** der Ring (27) an seinem Umfang eine ringförmige Randleiste (28) aufweist, die in der axialen Richtung ausgerichtet ist und zur Hülse (20) vorsteht.

8. Ventil nach einem der Ansprüche 5 bis 7, **dadurch gekennzeichnet, dass** die Feder (23; 123) mit axialer Elastizität mit eine Ende auf dem Ring (27; 127) aufliegt.

9. Ventil nach einem der Ansprüche 1 bis 8, **dadurch gekennzeichnet, dass** die Kupplungsmuffe (29; 129) einen ringförmigen Abschnitt (40; 140) und einen rohrförmigen Abschnitt (41; 141) aufweist, die global den gleichen Innendurchmesser haben, wobei der Außendurchmesser des ringförmigen Abschnitts (40; 140) größer ist als derjenige des rohrförmigen Abschnitts (41; 141), mit einer Querschulterfläche (42; 142) zwischen der äußeren Seitenfläche des ringförmigen Abschnitts (40; 140) und der äußeren Seitenfläche des rohrförmigen Abschnitts (41; 141).

10. Ventil nach Anspruch 9, **dadurch gekennzeichnet, dass** die Schulterfläche (42; 142) entgegengesetzt zu der Querseite (30; 130) liegt, in der Einbuchtungen (31; 131) ausgebildet sind, wobei die Feder (23; 123) mit axialer Elastizität mit einem Ende auf der Querschulterfläche (42; 142) aufliegt.

11. Ventil nach einem der Ansprüche 9 oder 10, **dadurch gekennzeichnet, dass** die Kupplungsmuffe (29; 129) in der äußeren Seitenfläche des ringförmigen Abschnitts (40; 140) eine Ringnut für die Aufnahme einer Dichtung (49; 149) aufweist.

12. Ventil nach einem der Ansprüche 9 bis 11, **dadurch gekennzeichnet, dass** der rohrförmige Abschnitt (41) der Kupplungsmuffe (29) entgegengesetzt zum ringförmigen Abschnitt (40) einen ringförmigen Kragen (43) aufweist, der ausgehend von der inneren Seitenfläche der Kupplungsmuffe (29) nach innen vorsteht.

13. Ventil nach Anspruch 12, **dadurch gekennzeichnet, dass** die innere Seitenfläche des Kragens (43) eine Ringnut für die Aufnahme einer Dichtung (50) aufweist.

14. Ventil nach einem der Ansprüche 1 bis 13, **dadurch gekennzeichnet, dass** die Stützmuffe (22) durch Schweißen starr mit der Antriebswelle (17) verbunden ist.

15. Ventil nach einem der Ansprüche 1 bis 13, **dadurch gekennzeichnet, dass** die Stützmuffe (122) durch Aufpressen starr mit der Antriebswelle (117) verbunden ist.

16. Ventil nach Anspruch 15, **dadurch gekennzeichnet, dass** die Antriebswelle (117) in einem von der Stützmuffe (122) umgebenen Abschnitt (60) einen größeren Außendurchmesser aufweist als in einem nicht von der Stützmuffe (122) umgebenen, benachbarten Abschnitt (61), während die Stützmuffe (122) in einem Aufpressabschnitt (63) einen kleineren Innendurchmesser aufweist als in einem dem Aufpressabschnitt benachbarten Abschnitt (62), wobei der Aufpressabschnitt (63) der Stützmuffe (122) auf den Abschnitt mit größerem Durchmesser (60) der Welle (117) aufgepresst wird.

17. Ventil nach Anspruch 16, **dadurch gekennzeichnet, dass** der Aufpressabschnitt (63) der Stützmuffe (122) weniger lang ist als der Abschnitt mit größerem Durchmesser (60) der Antriebswelle (117).

18. Ventil nach Anspruch 17, **dadurch gekennzeichnet, dass** der Aufpressabschnitt (63) sich zwischen dem benachbarten Abschnitt (62) der Stützmuffe (122) und dem der Hülse (120) entgegengesetzten Ende der Stützmuffe (122) befindet.

19. Modul für ein Lenkventil nach einem der Ansprüche 1 bis 18, der aufweist:
- eine Stützmuffe (22; 122);
- eine Feder (23; 123) mit axialer Elastizität; und
- eine Kupplungsmuffe (29; 129) mit einer Querseite (30; 130), in der Einbuchtungen (31; 131) zur Aufnahme von Kugeln (32; 132) ausgebildet sind, wobei die Feder zwischen der Kupplungsmuffe (29; 129) und der Stützmuffe (22; 122) angeordnet ist, wobei die Feder (23; 123) die Kupplungsmuffe (29; 129) zu der Seite hin beaufschlagt, der die Querseite (30; 130) gegenüber liegt;
**dadurch gekennzeichnet, dass**:
- die Stützmuffe (22; 122) einen von der Kupplungsmuffe umgebenen Abschnitt (25; 125) aufweist; und
- Montagemittel mit axialer Translationsbewegung (35-37; 135-137), die jede andere relative Bewegung verhindern, zwischen dem umgebenen Abschnitt (25; 125) der Stützmuffe (22; 122) und der Kupplungsmuffe (29; 129) vorgesehen sind.

20. Modul nach Anspruch 19, **dadurch gekennzeichnet, dass** die Stützmuffe (22; 122) einen global rohrförmigen Mantelring (25; 125) aufweist, der die Antriebswelle (17; 117) umgibt, wobei der von der Kupplungsmuffe (29; 129) umgebene Abschnitt der Stützmuffe (22; 122) zum Mantelring (25; 125) gehört.

21. Modul nach Anspruch 20, **dadurch gekennzeichnet, dass** die Montagemittel mit axialer Translationsbewegung auf der äußeren Seitenfläche des Mantelrings (25; 125) axial ausgerichtete Nuten (35; 135) aufweisen, die je geeignet sind, um mit Kugeln (37; 137) zusammenzuwirken.

22. Modul nach Anspruch 21, **dadurch gekennzeichnet, dass** die Kupplungsmuffe (29; 129) eine innere Seitenfläche aufweist, in der axial ausgerichtete Nuten gleich den Nuten (35; 135) des Mantelrings (25; 125) ausgebildet sind, wobei die Kugeln (37; 137) je in eine Nut (36; 136) der Kupplungsmuffe (29; 129) und in eine Nut des Mantelrings (25; 125) eingeführt sind.

23. Modul nach Anspruch 22, **dadurch gekennzeichnet, dass** er einen Käfig (44; 144) für den Halt der Kugeln (37; 137) in Stellung aufweist.

24. Modul nach Anspruch 23, **dadurch gekennzeichnet, dass** der Käfig (44) global rohrförmig ist und auf der Seite entgegengesetzt zu derjenigen, die der Querseite (30) gegenüber liegt, einen nach innen vorstehenden Kragen (45) aufweist.

25. Modul nach einem der Ansprüche 20 bis 24, **dadurch gekennzeichnet, dass** die Stützmuffe (22; 122) entgegengesetzt zur Hülse (20; 120) einen Ring (27; 127) aufweist, der ausgehend von dem Mantelring (25; 125) radial nach außen vorsteht.

26. Modul nach Anspruch 25, **dadurch gekennzeichnet, dass** der Ring (27; 127) in eine Ringnut (26; 126) eingeführt ist, die in der äußeren Seitenfläche des Mantelrings (25; 125) ausgebildet ist.

27. Modul nach einem der Ansprüche 25 oder 26, **dadurch gekennzeichnet, dass** der Ring (27) an seinem Umfang eine ringförmige Randleiste (28) aufweist, die gemäß der axialen Richtung ausgerichtet ist und zur Hülse (20) vorsteht.

28. Modul nach einem der Ansprüche 25 bis 27, **dadurch gekennzeichnet, dass** die Feder (23; 123) mit axialer Elastizität mit einem Ende auf dem Ring (27; 127) aufliegt.

29. Modul nach einem der Ansprüche 19 bis 28, **dadurch gekennzeichnet, dass** die Kupplungsmuffe (29; 129) einen ringförmigen Abschnitt (40; 140) und einen rohrförmigen Abschnitt (41; 141) aufweist, die global den gleichen Innendurchmesser haben, wobei der Außendurchmesser des ringförmigen Abschnitts (40; 140) größer ist als derjenige des rohrförmigen Abschnitts (41; 141), mit einer Querschulterfläche (42; 142) zwischen der äußeren Seitenfläche des ringförmigen Abschnitts (40; 140) und der äußeren Seitenfläche des rohrförmigen Abschnitts (41; 141).

30. Modul nach Anspruch 29, **dadurch gekennzeichnet, dass dadurch gekennzeichnet, dass** die Schulterfläche (42; 142) entgegengesetzt zur Querseite (30; 130) liegt, in der Einbuchtungen (31; 131) ausgebildet sind, wobei die Feder (23; 123) mit axialer Elastizität mit einem Ende auf der Querschulterfläche (42; 142) aufliegt.

31. Modul nach einem der Ansprüche 29 oder 30, **dadurch gekennzeichnet, dass** die Kupplungsmuffe (29; 129) in der äußeren Seitenfläche des ringförmigen Abschnitts (40; 140) eine Ringnut zur Aufnahme einer Dichtung (49; 149) aufweist.

32. Modul nach einem der Ansprüche 29 bis 31, **dadurch gekennzeichnet, dass** der rohrförmige Abschnitt (41) der Kupplungsmuffe (29) entgegengesetzt zum ringförmigen Abschnitt (40) einen ringförmigen Kragen (43) aufweist, der ausgehend von der inneren Seitenfläche der Kupplungsmuffe (29) nach innen vorsteht.

33. Modul nach Anspruch 32, **dadurch gekennzeichnet, dass** die innere Seitenfläche des Kragens (43) eine Ringnut zur Aufnahme einer Dichtung (50) aufweist.

34. Modul nach einem der Ansprüche 19 bis 33, **dadurch gekennzeichnet, dass** die Stützmuffe (122) in einem Aufpressabschnitt (63) einen kleineren Innendurchmesser als in einem dem Aufpressabschnitt benachbarten Abschnitt (62) aufweist.

35. Modul nach Anspruch 34, **dadurch gekennzeichnet, dass** der Aufpressabschnitt (63) der Stützmuffe (122) weniger lang ist als der benachbarte Abschnitt (62) der Stützmuffe (122).

36. Modul nach Anspruch 35, **dadurch gekennzeichnet, dass** der Aufpressabschnitt (63) sich zwischen dem benachbarten Abschnitt (62) der Stützmuffe und dem Ende der Stützmuffe (122) befindet, das der Querseite (130) der Kupplungsmuffe (129) entgegengesetzt ist.

37. Modul nach einem der Ansprüche 34 bis 36, **dadurch gekennzeichnet, dass** er eine Wartestellung zulässt, in der die Kupplungsmuffe (129) unter der Wirkung der Feder (123) in Anschlag ist und von der Stützmuffe (122) über eine Länge vorsteht, die mindestens gleich der Länge des Aufpressabschnitts (63) ist.
